# EUROPEAN PATENT APPLICATION

(11) **EP 4 768 757 A1**
(43) Date of publication of application: **01.07.2026**
(21) Application number: 24223299.9
(22) Date of filing: 26.12.2024
(51) Int. Cl.: F16H 63/30

(54) **GEARBOX WITH AN IMBRICATED ENGAGING MECHANISM**

(71) Applicant: Volvo Truck Corporation, 405 08 Göteborg (SE)
(72) Inventor: BARILLOT, Thomas, 69440 Mornant (FR)
(74) Representative: Ex Materia

(57) **Abstract**

The invention concerns a gearbox of a vehicle (3), comprising at least a first input gear (111), a second input gear (112), a first output gear (121), a second output gear (122) and an engaging mechanism (4) able to connect one of the input gears (111, 112) with one of the output gears (121, 122), said engaging mechanism (4) comprising at least a first sleeve (131) and a second sleeve (132) both rotating coaxially around an axis X, said first sleeve (131) and said second sleeve (132) being rotationally linked with each other and capable of moving axially one relative to the other said along the axis X, said second sleeve (132) extending at least partly inside the first sleeve (131), said first sleeve (131) being able to engage with one of the input gears (111, 112) and said second sleeve (132) being able to engage with one of the output gears (121, 122), said first sleeve (131) and said second sleeve (132) both comprising an actuation area (131a, 132a) for moving axially the concerned sleeve (131, 132).

## Description

### TECHNICAL FIELD

The invention relates in general to a gearbox for a vehicle and more particularly to an electric powertrain equipped with such gearbox. The invention may find an application in low-duty, medium-duty and heavy-duty vehicles, such as trucks, busses, construction equipment, boats, or passenger cars.

The transport industry is moving to electro mobility to deal with emission regulation requirements which are becoming more and more demanding and with cities forbidding internal combustion engine vehicles in their center towns.

An electric powertrain consists of at least an electric motor and a connection to at least one wheel. It usually also includes a gearbox, a differential and driveshafts, as well as an axle body or housing that may contain some of these components. Within the powertrain, the main role of the gearbox is to increase the torque and to reduce the speed between the electric motor output shaft and the vehicle's wheels.

Most electric motors have an ideal operating range that is achieved at relatively high speed and low torque. In some operating conditions, for example for heavy load starts or hill starts, the torque demand at the wheels is higher than usual. In such cases, a high reduction ratio between the electric motor and the wheels is required, but this would overspin the electric motor in cruise condition, which would drop system efficiency.

For high Gross Combination Weight (GCW) vehicles, typically trucks, it has been demonstrated that a fixed ratio is not enough and that a multispeed gearbox is needed. This is even more true as GCW increases, which aims for more gears.

The drawbacks of such known architecture liaise in the fact that the ratio steps are too wide and cause difficulties on startability, efficiency in cruise speeds, power drops while shifting speeds, and complexity in gear shifting system. Another issue is the available space to package more gears, as adding gears generally takes space, for the gears themselves and for the gear shifting mechanisms.

The truck industry also suffers from the fact that any transmission concept must be very compact to fit in a tight environment resulting in the transversal mounting of the electrical motor.

Therefore, there is a need for a compact electric powertrain with a high torque capacity that is able to provide a wide range of vehicle speeds or wide range of de-multiplication ratios.

The proposed invention falls within this context and proposes a gearbox that comprises more speeds than the known architectures, some of such speeds being engaged and disengaged using an imbricated engaging mechanism, said gearbox respecting a very compact design.

### GENERAL DEFINITION OF THE INVENTION

To this end, one subject of the invention is a gearbox of a vehicle, comprising at least a first input gear, a second input gear, a first output gear, a second output gear and an engaging mechanism able to connect one of the input gears with one of the output gears, said engaging mechanism comprising at least a first sleeve and a second sleeve both rotating coaxially around an axis, said first sleeve and said second sleeve being rotationally linked with each other and capable of moving axially one relative to the other said along the axis, said second sleeve extending at least partly inside the first sleeve, said first sleeve being able to engage with one of the input gears and said second sleeve being able to engage with one of the output gears, said first sleeve and said second sleeve both comprising an actuation area for moving axially the concerned sleeve.

Thanks to these features, the gearbox of the invention makes it possible to improve space efficiency inside the gearbox, enabling more gear options in the same volume of a gearbox, and allowing for a modular approach to powertrain design.

According to an optional feature of the invention, said first sleeve and said second sleeve form a drive force sub-assembly transmitting a rotation speed and/or torque between one of the input gears and one of the output gears.

It is to be noted that the sleeves are part of the force transmission route. The transmitted power and/or torque can transit in both directions, from input gears to output gears as well as from output gears to input gears.

According to an optional feature of the invention, said second sleeve comprises at least a shaft, said first sleeve comprising a bearing supported by the shaft.

The design according to this option is an axially sliding connection but a rotationally fixed connection. The rotation is supported by the shaft. Thanks to these features, it is possible to improve space efficiency by imbricating two movable parts. This imbrication can also give access to gears which are usually not easily accessible because they are encapsulated by other rotating components.

According to an optional feature of the invention, the actuation area of the first sleeve is located at a longitudinal end of the first sleeve.

According to another optional feature of the invention, the actuation area of the second sleeve is located at a longitudinal end of the second sleeve.

These smart technical choices ease the possibility to act on the first sleeve respectively the second sleeve, at an area of the gearbox where there are less components.

According to an optional feature of the invention, the first sleeve comprises an engaging organ that is configured to engage with the first input gear or with the second input gear.

According to an optional feature of the invention, the second sleeve comprises an engaging organ that is configured to engage with the first output gear or with the second output gear.

Thanks to these features, the first sleeve and/or the second sleeve comprises teeth surfaces on each of its sides, first teeth surface being able to engage the first input gear while second teeth surface being able to engage the second input gear.

According to an optional feature of the invention, the engaging organ of the first sleeve is axially located, along axis X, between the actuation area of the first sleeve and the engaging organ of the second sleeve.

According to an optional feature of the invention, the first sleeve is axially located, along axis X, between the actuation area of the second sleeve and the engaging organ of said second sleeve.

These technical features are an efficient way to save space because, from an axial point of view, the engaging organ of the first sleeve and/or the first sleeve is included in the second sleeve.

According to an optional feature of the invention, an external diameter of the first input gear is lower than an external diameter of the second input gear.

According to an optional feature of the invention, an external diameter of the first output gear is bigger than an external diameter of the second output gear.

Thanks to these features, it is possible to define various speeds of the gearbox.

According to an optional feature of the invention, at least one of the output gears is a rotating member of a planetary gear train. As an example, the concerned output gear may be a sun gearwheel, planet gearwheels held by a planet carrier, a ring gearwheel, all these components being part of a planetary gearset.

According to an optional feature of the invention, at least one of the input gears is a non-rotating member. A housing of the gearbox, or any element fixedly attached to the housing, may be considered as a non-rotating member of the gearbox.

A second aspect of the invention is directed at a powertrain system for a vehicle, comprising at least an internal combustion engine or an electric motor and a gearbox as described in the present document.

A third aspect of the invention is directed at a powertrain system for a vehicle, comprising at least an internal combustion engine and a gearbox as described in the present document.

Finaly, the invention covers a vehicle comprising a powertrain system as described above. Preferably, said vehicle also comprises a differential.

### BRIEF DESCRIPTION OF THE FIGURES

Further features, details and advantages of the invention will become apparent upon reading the description given with reference to the appended drawings, which are given by way of example in which:
Figure 1 is a perspective view of a truck comprising at least one gearbox according to the invention ;
Figure 2 is a schematic view of speeds in neutral position of a gearbox according to the invention ;
Figure 3 is a schematic view of speed 1 of a gearbox according to the invention ;
Figure 4 is a schematic view of speed 2 of a gearbox according to the invention ;
Figure 5 is a schematic view of speed 3 of a gearbox according to the invention ;
Figure 6 is a schematic view of speed 4 of a gearbox according to the invention.

### DETAILED DESCRIPTION OF THE INVENTION

The characteristics, variants and various embodiments of the invention, as they have been described or as they will be presented in the detailed description which follows, can be associated with each other, according to various combinations, to the extent that they are not incompatible or exclusive with respect to each other. In particular, it will be possible to imagine variants of the invention comprising only a selection of characteristics described subsequently isolated from the other characteristics described, if this selection of characteristics is sufficient to confer a technical advantage and/or to differentiate the invention compared to the prior art.

For the sake of clarity, the same elements are designated by the same references in the different figures.

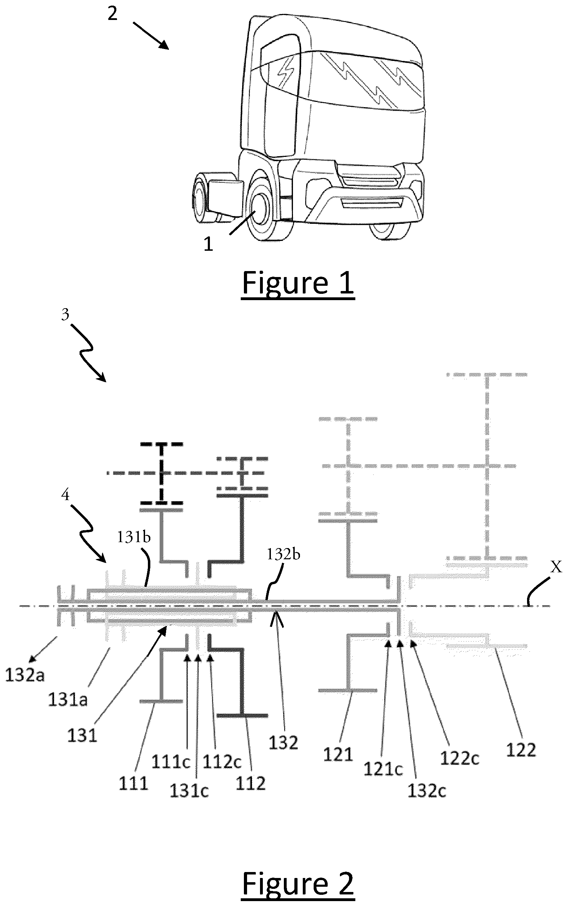

Figure 1 is a perspective view of a truck 2 comprising two axles 1a, 1b, respectively a rear axle 1a and a front axle 1b (according to a 4*2 configuration). In an alternative embodiment, the truck 2 may comprise one or more additional axle(s).

At least one of the two axles is motorized, i.e. comprises at least an electric motor and/or an internal combustion engine, as well as a gear box according to the invention. In the example depicted in Figure 1, it is considered that only the rear axle 1a is motorized. Nevertheless, the invention also applies to a truck in which the front axle is motorized, alone or in combination with a motorized rear axle. The gearbox of the invention is therefore a part of a powertrain system configured to provide propulsion to the vehicle 2. The invention can best be used with an electrical powertrain system, that is to say in association with an electrical motor. The invention can also be used with an internal combustion engine alone, or in combination with an electrical motor. In such configuration, the gearbox is directly fastened to engine housing.

The invention is dedicated to a gearbox 3 of such vehicle, as schematically illustrated on figures 2 to 6. Said gearbox 3 comprises at least two input gears, respectively a first input gear 111 and a second input gear 112. These two input gears may be the ones through which power provided by the engine and/or electric motor(s) enters the gearbox 3. An external diameter of the first input gear 111 is lower than an external diameter of the second input gear 112 and this is a way to define two different speed ratios of the gearbox 3.

The gearbox 3 also comprises at least two output gears, namely a first output gear 121 and a second output gear 122. These two output gears may be the ones through which the power is transmitted to the wheels. An external diameter of the first output gear 121 is bigger than an external diameter of the second output gear 122. This is a way to define two different speeds of the gearbox 3, in addition to the speeds defined via the input gears 111, 112.

The gearbox 3 of the invention may comprise stage of speeds defined by a planetary gear train located inside the gearbox 3. As an example of the invention, at least one of the output gears 121, 122 is a rotating member of a planetary gear train. In another embodiment, at least one of the input gears 111, 112 is a non-rotating member. To do that, the input gear may be fixed or fastened to a non-rotating component, such as housing.

Of course, the gearbox 3 of the invention may comprise additional gears in between the input gear and the output gear, depending on the number of speeds required for the vehicle weight and use.

The gearbox 3 of the invention also includes an engaging mechanism 4 able to connect one of the input gears 111, 112 with one of the output gears 121, 122. In a general sense, the engaging mechanism 4 is a device able to mechanically link two distinct gears inside a gearbox. As illustrated on figures 2 to 6, the role of the engaging mechanism 4 is to link the first input gear 111 or the second input gear 112 with the first output gear 121 or with the second output gear 122. Said link is dedicated to the transmission of a rotational movement between the input gears and the output gears.

It should also be noted that the engaging mechanism 4 may also be placed in a neutral position, where none of the input gears 111, 112 is linked with the output gears 121, 122.

The engaging mechanism 4 comprises at least a first sleeve 131 and a second sleeve 132 both rotating coaxially around an axis X, as illustrated on figure 1. Said first sleeve 131 and said second sleeve 132 form a drive force sub-assembly transmitting rotational power from one of the input gears 111, 112 to one of the output gears 121, 122, or from one of the output gears 121, 122 to one of the input gears 111, 112. Power transfer between the input and the output follows a way through the different gears and mechanisms of the gearbox 3, and said sleeves 131, 132 are parts of the power transmission route inside the gearbox when a speed is engaged.

The engaging mechanism is designed to engage the first input gear 111 or the second input gear 112. This rotational engagement is operated via an engaging organ 131c formed onto the first sleeve 131, especially at a location between each longitudinal ends of the first sleeve 31.

The engaging mechanism is also designed to engage the first output gear 121 or the second input gear 122. This rotational engagement is operated via an engaging organ 132c formed at a longitudinal end of the second sleeve 132.

The engaging organ 131c of the first sleeve 131 is axially located, along the above referenced axis X, between an actuation area 131a of the first sleeve 131 and the engaging organ 132c of the second sleeve 132. This architecture allows more available space inside the gearbox 3.

As an example, the engaging organ 131c, 132c of the first sleeve 131, respectively of the second sleeve 132, is a teeth gear able to mesh with the teeth of the input gear 111, 112, respectively of the output gear 121, 122.

Said sleeves 131, 132 are each a cylindrical tube extending along the axis X and they are both able to rotate and to supply rotational movement. Said first sleeve 131 comprises a bearing 131b which is for example a through hole extending along the axis X. The second sleeve 132 comprises a shaft 132b that extends inside the bearing 131b of said first sleeve 131, said bearing 131b being a support for the shaft 132b. Said design improves space saving inside the gearbox by imbricating two movable parts, one inside the other.

A length, measured along the axis X, of the second sleeve 132 is bigger than a length of the first sleeve 131. Said first sleeve 131 and said second sleeve 132 are each having a first end and a second end, the first end of said second sleeve 132 extending away from the first end of the first sleeve 131, while the second end of said second sleeve 132 extends away from the second end of the first sleeve 131. Said in a general way, the second sleeve 132 is extending at least partly inside the first sleeve 131, and said second sleeve 132 goes beyond said first sleeve 131.

The first sleeve 131 is axially located between an actuation area 132a of the second sleeve 132 and the engaging organ 132c of said second sleeve 132. Said in other words, the first sleeve 131 is fully included within the second sleeve 132, lengthwise.

In the engaging mechanism 4, said first sleeve 131 and said second sleeve 132 are rotationally linked with each. Said in other words, the rotation around the axis X of said first sleeve 131 forces a rotation around the axis X of said second sleeve 132.

It shall be noted that the first sleeve 131 and the second sleeve 132 are both able to move axially, that is to say along the axis X. This axial movement allows the first sleeve 131 to engage with the first input gear 111 or with the second input gear 112. The axial movement of the second sleeve 132 allows said sleeve to engage with the first output gear 121 or with the second output gear 122.

This configuration implies that the first sleeve 131 and the second sleeve 132 are designed to be able to move axially one relative to the other, along the axis X of the engaging mechanism.

Axial movement and rotational engagement between first sleeve 131 and second sleeve 132 can be made for example via at least a tooth of one sleeve engaging inside an elongated hole of the other sleeve, irrespective first or second sleeve being concerned by said example. The length of said elongated hole is bigger than the length of said tooth, in order to allow axial movement between the sleeves 131, 132.

According to the invention, the first sleeve 131 and the second sleeve 132 both comprise an actuation area 131a, 132a dedicated to move axially the concerned sleeve 131, 132. As an example, the actuation area 131a of the first sleeve 131 is located at a first longitudinal end of the first sleeve 131, along the axis X of said sleeve. The actuation area 132a of the second sleeve 132 is located at a first longitudinal end of the second sleeve 132, on the same side as for the first sleeve 131.

Actuation area 131a, 132a of the first sleeve 131 or of the second sleeve 132 is a peripheral ring inside which a fork can be placed, said fork being able to actuate axially the concerned sleeve. The fork is controlled by actuation means that are located inside or outside the gearbox 3.

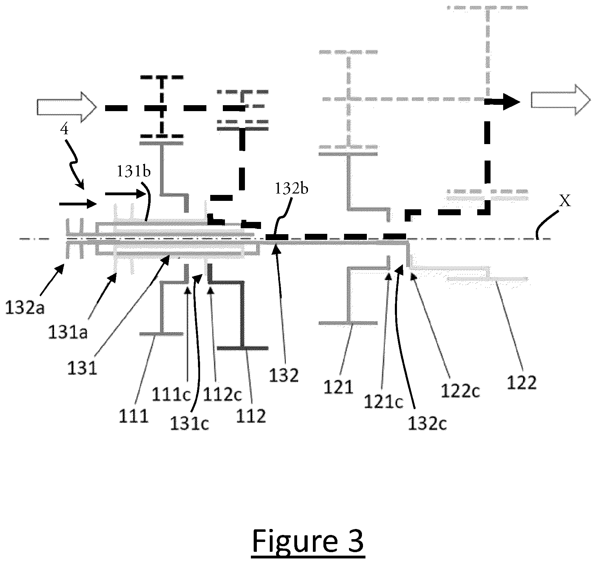

While figure 2 shows the gearbox 3 of the invention in a neutral position, figures 3 to 6 show the gearbox 3 of the invention in different speed engagements. In these figures 3 to 6, the torque way is illustrated by a bolt-dotted lines showing the components through which the torque is passing. Figures 2 to 6 show a gearbox with four speeds, but the invention is not limited to this number of speeds, the engaging mechanism 4 of the invention being appropriate for any number of speeds superior to two.

In figure 3, a first speed of the gearbox 3 is engaged. The power comes from an internal combustion engine and/or an electrical motor flow through the second input gear 112.

The first sleeve 131 of the engaging mechanism 4 is moved via its actuation area 131a and is pushed axially in a position where the engaging organ 131c of the first sleeve 131 meshed with the second input gear 112, especially to the right side of the drawing.

Power coming from this second input gear 112 flows through the first sleeve 131 and then through the second sleeve 132, since the first sleeve 131 and the second sleeve 132 are rotationally linked. Then, the power flows through the shaft 132b of the second sleeve 132 and is transmitted to the second output gear 122.

The external diameter of the second input gear 112 is bigger than the external diameter of the first input gear 111. The external diameter of the second output gear 122 is lower than the external diameter of the first output gear 121. These features determine the first speed of the gearbox 3.

The engaging organ 132c of the second sleeve 132 is meshed with the second output gear 122 because the second sleeve has been axially moved, especially to the right side of the drawing. This is possible because a fork acts on the actuation area 132a of the second sleeve 132 and pushes said second sleeve 132. In the case of figure 3, the first sleeve 131 and the second sleeve 132 are positioned both to their right-side position.

The power and/or the torque then flows through the second output gear 122 and can be transmitted outside of the gearbox, or to a subsequent component of the gearbox.

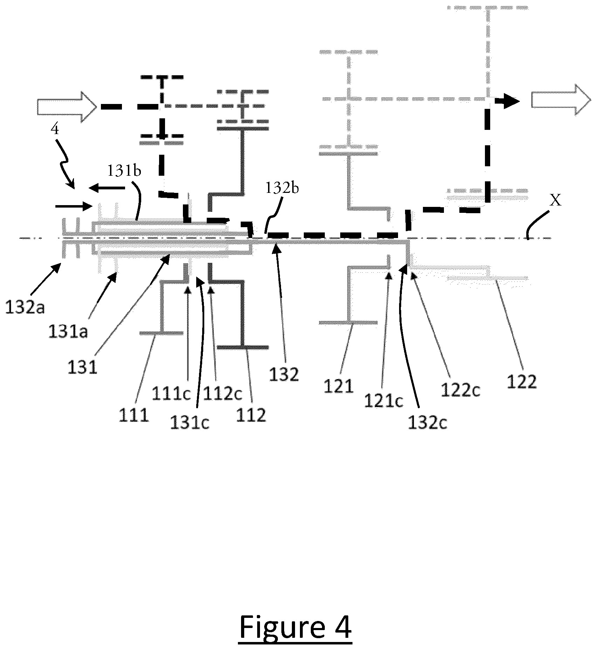

In figure 4, a second speed of the gearbox 3 is engaged. The power comes from an internal combustion engine and/or an electrical motor flow through the first input gear 111.

The first sleeve 131 of the engaging mechanism 4 is moved via its actuation area 131a and is pushed axially in a position where the engaging organ 131c of the first sleeve 131 meshed with the first input gear 111, especially to the left side of the drawing.

Power coming from this first input gear 111 flows through the first sleeve 131 and then through the second sleeve 132, since the first sleeve 131 and the second sleeve 132 are rotationally linked. Then, the power flows through the shaft 132b of the second sleeve 132 and is transmitted to the second output gear 122.

The external diameter of the first input gear 111 is lower than the external diameter of the second input gear 112. The external diameter of the second output gear 122 is lower than the external diameter of the first output gear 121. These features determine the second speed of the gearbox 3.

The engaging organ 132c of the second sleeve 132 is meshed with the second output gear 122 because the second sleeve has been axially moved, especially to the right side of the drawing. This is possible because a fork acts on the actuation area 132a of the second sleeve 132 and pushes said second sleeve 132. In the case of figure 4, the first sleeve 131 is positioned to its left-side position while the second sleeve 132 is positioned to its right-side position.

The power then flows through the second output gear 122 and can be transmitted outside of the gearbox, or to a subsequent component of the gearbox.

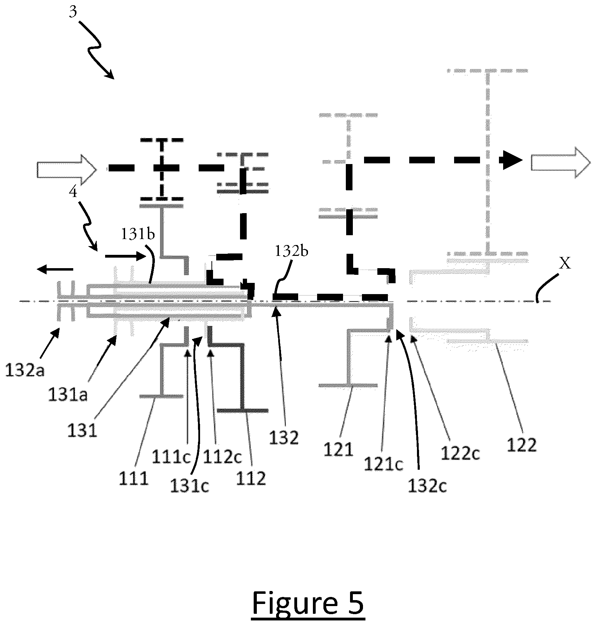

In figure 5, a third speed of the gearbox 3 is engaged. The power comes from an internal combustion engine and/or an electrical motor flow through the second input gear 112.

The first sleeve 131 of the engaging mechanism 4 is moved via its actuation area 131a and is pushed axially in a position where the engaging organ 131c of the first sleeve 131 meshed with the second input gear 112, especially to the right side of the drawing.

Power coming from this second input gear 112 flows through the first sleeve 131 and then through the second sleeve 132, since the first sleeve 131 and the second sleeve 132 are rotationally linked. Then, the power flows through the shaft 132b of the second sleeve 132 and is transmitted to the first output gear 121.

The external diameter of the second input gear 112 is bigger than the external diameter of the first input gear 111. The external diameter of the first output gear 121 is bigger than the external diameter of the second output gear 122. These features determine the third speed of the gearbox 3.

The engaging organ 132c of the second sleeve 132 is meshed with the first output gear 121 because the second sleeve has been axially moved, especially to the left side of the drawing. This is possible because a fork acts on the actuation area 132a of the second sleeve 132 and pushes said second sleeve 132. In the case of figure 5, the first sleeve 131 and the second sleeve 132 are positioned on opposed sides, that is to say the first sleeve 131 is positioned to its right-side position while the second sleeve 132 is positioned to its left-side position.

The power then flows through the first output gear 121 and can be transmitted outside of the gearbox, or to a subsequent component of the gearbox.

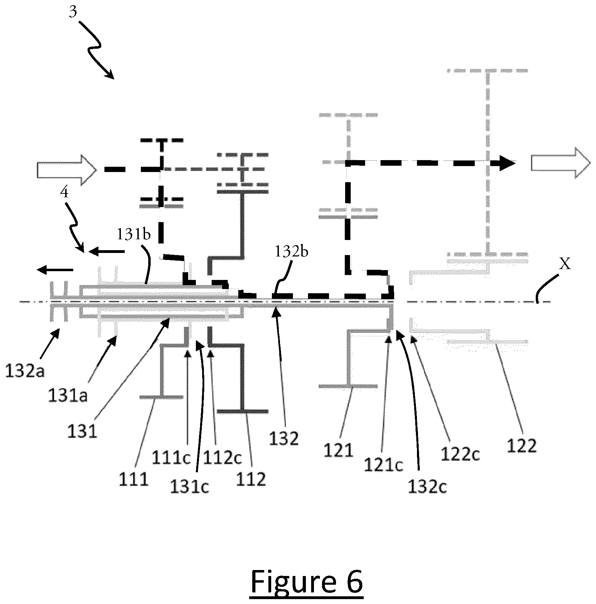

In figure 6, a fourth speed of the gearbox 3 is engaged. The power comes from an internal combustion engine and/or an electrical motor flow through the first input gear 111.

The first sleeve 131 of the engaging mechanism 4 is moved via its actuation area 131a and is pushed axially in a position where the engaging organ 131c of the first sleeve 131 meshed with the first input gear 111, especially to the left side of the drawing.

Power coming from this first input gear 111 flows through the first sleeve 131 and then through the second sleeve 132, since the first sleeve 131 and the second sleeve 132 are rotationally linked. Then, the power flows through the shaft 132b of the second sleeve 132 and is transmitted to the first output gear 121.

The external diameter of the first input gear 111 is lower than the external diameter of the second input gear 112. The external diameter of the first input gear 121 is bigger than the external diameter of the second output gear 122. These features determine the fourth speed of the gearbox 3.

The engaging organ 132c of the second sleeve 132 is meshed with the first output gear 121 because the second sleeve has been axially moved, especially to the left side of the drawing. This is possible because a fork acts on the actuation area 132a of the second sleeve 132 and pushes said second sleeve 132. In the case of figure 6, the first sleeve 131 and the second sleeve 132 are positioned to their left-side position.

The power then flows through the first output gear 121 and can be transmitted outside of the gearbox, or to a subsequent component of the gearbox.

The gearbox 3 as described in relation to figures 2 to 6 can be part of a powertrain system of a vehicle 2, for example an electrical powertrain system for a truck. In such a case, this electrical powertrain system comprises at least one electric motor dedicated to moving the vehicle along a road, said electric motor being for example embedded in or supported by an axle of the vehicle.

The electric motor may be an AC type motor, synchronous or asynchronous. Alternatively, the electric motor may be DC type motor (brushed or brushless). More generally, in the scope of the invention, any electric motor is suitable for powering the gearbox according to the invention.

The gearbox 3 as described in relation to figures 2 to 6 can also be part of a powertrain system for a vehicle, for example a thermal powertrain system. In such a case, this powertrain system comprises at least an internal combustion engine dedicated to moving the vehicle along a road.

According to the invention, the electric powertrain system and the thermal powertrain system can be combined to form a hybrid powertrain system installed on the vehicle.

The gearbox 3 of the invention solves the problem identified in the prior art, especially for important GCW vehicles. The engaging mechanism 4 with its two sleeves sliding one inside the other allows saving space inside the gearbox.

Of course, the invention is not limited to the examples which have just been described and numerous adjustments can be made to these examples without departing from the scope of the invention. In particular, the characteristics of different variant embodiments of the invention can be combined to achieve the invention, to the extent that these variants are not incompatible with each other.

## Claims

1. A gearbox of a vehicle (3), comprising at least a first input gear (111), a second input gear (112), a first output gear (121), a second output gear (122) and an engaging mechanism (4) able to connect one of the input gears (111, 112) with one of the output gears (121, 122), said engaging mechanism (4) comprising at least a first sleeve (131) and a second sleeve (132) both rotating coaxially around an axis X, said first sleeve (131) and said second sleeve (132) being rotationally linked with each other and capable of moving axially one relative to the other said along the axis X, said second sleeve (132) extending at least partly inside the first sleeve (131), said first sleeve (131) being able to engage with one of the input gears (111, 112) and said second sleeve (132) being able to engage with one of the output gears (121, 122), said first sleeve (131) and said second sleeve (132) both comprising an actuation area (131a, 132a) for moving axially the concerned sleeve (131, 132).

2. The gearbox according to claim 1, wherein said first sleeve (131) and said second sleeve (132) form a drive force sub-assembly transmitting power and/or torque between one of the input gears (111, 112) and one of the output gears (121, 122).

3. The gearbox according to claim 1 or 2, wherein said second sleeve (132) comprises at least a shaft (132b), said first sleeve (131) comprising a bearing (131b) supported by the shaft (132b).

4. The gearbox according to any of claims 1 to 3, wherein the actuation area (131a) of the first sleeve (131) is located at a longitudinal end of the first sleeve (131).

5. The gearbox according to any of claims 1 to 4, wherein the actuation area (132a) of the second sleeve (132) is located at a longitudinal end of the second sleeve (132).

6. The gearbox according to any of claims 1 to 5, wherein the first sleeve (131) comprises an engaging organ (131c) that is configured to engage with the first input gear (111) or with the second input gear (112).

7. The gearbox according to any of claims 1 to 6, wherein the second sleeve (132) comprises an engaging organ (132c) that is configured to engage with the first output gear (121) or with the second output gear (122).

8. The gearbox according to claim 7, wherein the engaging organ (131c) of the first sleeve (131) is axially located, along axis X, between the actuation area (131a) of the first sleeve (131) and the engaging organ (132c) of the second sleeve (132).

9. The gearbox according to claim 7 or 8, wherein the first sleeve (131) is axially located, along axis X, between the actuation area (132a) of the second sleeve (132) and the engaging organ (132c) of said second sleeve (132).

10. The gearbox according to any of claims 1 to 9, wherein an external diameter of the first input gear (111) is lower than an external diameter of the second input gear (112).

11. The gearbox according to any of claims 1 to 10, wherein an external diameter of the first output gear (121) is bigger than an external diameter of the second output gear (122).

12. The gearbox according to any of claims 1 to 11, wherein at least one of the output gears (121, 122) is a rotating member of a planetary gear train.

13. The gearbox according to claim 1, wherein at least one of the input gears (111, 112) is a non-rotating member.

14. A powertrain system for a vehicle, comprising at least an electric motor or an internal combustion engine and a gearbox (1) according to at least one of the claims 1 to 13.

15. A vehicle comprising a powertrain system according to claim 14.
